# EUROPEAN PATENT APPLICATION

(11) **EP 3 886 009 A1**
(43) Date of publication of application: **29.09.2021**
(21) Application number: 20166321.8
(22) Date of filing: 27.03.2020
(51) Int. Cl.: G06Q 10/06, G06Q 10/00

(54) **SYSTEM AND METHOD FOR MANAGEMENT OF AN ASSET**

(71) Applicant: Siemens Aktiengesellschaft, 80333 München (DE)
(72) Inventor: VENKATESWARAN, Sornam Viswanathan, 560049 Bangalore (IN); BHAMIDIPATI, Suryanarayana, 560066 Bangalore (IN)
(74) Representative: Patentanwaltskanzlei WILHELM & BECK

(57) **Abstract**

The present disclosure relates to a system (100) and method for management of an asset (105). The method comprises obtaining, by a processing unit (125), a fingerprint associated with at least one component of the asset (105) from a source (195). The fingerprint comprises a response of the component to a stimulus and a unique identifier associated with the component. The method further comprises identifying baseline data associated with the component from a distributed database. The method further comprises verifying the asset (105) based on the baseline data and the fingerprint associated with the component.

## Description

The present disclosure relates to management of an asset and more particularly relates to a system and a method for verifying the asset.

Process plants operate based on measurement and control of a plurality of process parameters. The process parameters may include, but are not limited to, temperature, pressure, flow rate, current, voltage, frequency and so on. Such process parameters are measured using measuring instruments or field devices such as flowmeters, pressure gauges, temperature sensors and so on. The outputs from the measuring instruments is further provided to a control system for controlling the operation of the process plant. Therefore, incorrect measurements by the field devices lead to maloperation of the process plant. The maloperation of the process plant may also lead to safety risks for human operators working in the process plant. In addition to process plants, other industries may also utilise such field devices for measurement of process parameters for billing and accounting purposes. For example, utility companies may use flowmeters to measure flowrate of water for quantifying water consumption by consumers.

In order to ensure proper functioning of the field devices, verification and validation of the field devices is performed in a timely manner. Typically, verification of a field devices is performed by an authorised entity based on quality regulations, such as the International Organization for Standardization (ISO) 9001, prescribed for the field device. The verification of the field device is performed in-situ using test rigs. Further, readings from the test rigs are recorded manually by the authorised entity. However, there may be occurences when the readings are incorrectly recorded by the authorised entity. Incorrect verification of the field devices may result in faults during operation of the process plant, eventually leading to resulting in losses or a reduction in product quality.

In light of the above, there is a need for a mechanism for in-situ verification of devices, specifically field devices, in a secure and immutable manner.

Therefore, it is an object of the present invention to provide a system and a method for management of an asset. The term `asset` as used herein, may refer to any device, system, instrument or machinery manufactured or used in an industry that may be tested for function or calibration. Further, the asset may be associated with a local memory unit such as a Programmable Read-Only-Memory(PROM), a microcontroller and so on. The local memory unit stores a unique identifier associated with the asset or one or more components of the asset. In one example, the unique identifier may be for example, a numeric string or a alphanumeric string that uniquely identifies the asset. The unique identifier may be assigned to the asset or the one or more components by an Original Equipment Manufacturer. In another example, the unique identifier may be assigned by another entity, for example, an end-user of the asset. In one embodiment, the local memory unit may be mechanically coupled to the asset. In another embodiment, the local memory unit may be associated with another system, for example, a workstation, a personal computer, a personal digital assistant (PDA) and so on.

The object of the present invention is achieved by a computer-implemented method for management of an asset. The method comprises obtaining, by a processing unit, fingerprint associated with at least one component of the asset from a source. The fingerprint comprises a response of the component to a stimulus and a unique identifier associated with the component. In one embodiment, the response of the component may be captured by providing the stimulus to the asset externally from a verification device. The verification device may be any apparatus that may be used for performing diagnostic tests on the asset in order to check whether the performance of the asset conforms to predefined standards. The predefined standards may be defined for an asset by entities, including but not limited to, a user of the asset, a manufacturer of the asset, a certifying authority and a governing body. In another embodiment, the stimulus may be generated internally by an electronic circuitry provided on the asset. The electronic circuitry provided on the asset may be configured to perform diagnostic tests on the asset, similar to an external verification device, over predefined intervals of time. The stimulus provided to the asset may be in the form of electrical signals having predefined signal characteristics. The predefined signal characteristics may include amplitude, phase or frequency associated with the electrical signal. For example, the electrical signal may be predefined as a sinusoidal signal of amplitude 10V and frequency of 100 Hertz. In another implementation, the stimulus may be generated upon detecting with deviations in usual functioning of the asset. For example, if an output of the asset is outside a predefined range, then one or more stimuli may be generated automatically in order to obtain the responses of one or more components of the asset. The response of the component may be an output of the component upon receiving the stimulus as input. For example, if the asset is a flowmeter, then the component of the asset may be a sensor in the flowmeter. In another example, the component may be a transmitter associated with the flowmeter.

Advantageously, the present invention supports both internal verification by the electronic circuitry provided on the asset as well as external verification using an external verification device.

The method further comprises identifying baseline data associated with the component from a distributed database. The distributed database may be a decentralized, distributed digital ledger that is used to record transactions across a plurality of nodes connected over a network, such that the recorded transactions are immutable and may be viewed by any of the nodes. In a preferred embodiment, the distributed database is implemented as a permissioned blockchain, where one or more nodes in the distributed database may be given express authority for validating transactions in the in the permissioned blockchain. In another embodiment, the distributed database may be implemented as a public blockchain or a combination of a public blockchain and a permissioned blockchain.

The baseline data may include reference values for critical paramaters associated with the asset. The critical parameters may include one or more parameters that indicate a health of the asset. Any variations in the value of a critical parameter from the respective reference value may indicate a deterioriation in the health or performance of the asset. In one embodiment, the baseline data comprises a response of the component obtained from one or more verifications conducted on the asset previously. In one example, the verification of the asset is performed at the time of installation of the asset in a field of operation. In another embodiment, the baseline data is associated with one or more calibrations performed on the asset previously. In one example, the calibration of the asset may be performed during a manufacturing phase of the asset. In addition, the baseline data may also comprise one or more performance characteristics of the asset obtained from one or more verifications or calibrations conducted on the asset previously. The one or more performance characteristic may be static characteristics including, but not limited to, accuracy, precision, analytical sensitivity, analytical specificity, reportable range and reference range. The performance characteristics may also include dynamic characteristics, including but not limited to, measuring lag, dynamic error, speed of response, fildelity and so on. The baseline data are stored in transactions or digital records on the distributed database. Each transaction may be associated with one or more components or with the asset. For example, each verification conducted on a component of the the asset may be recorded as a unique transaction on the distributed database. Each transaction comprises a header consisting of metadata associated with the transaction. The metadata may comprise different fields, including but not limited to, a timestamp associated with the transaction and a unique identifier associated with the component.

Advantageously, in the present invention, transactions corresponding to verification and/or calibration of the asset are stored as transactions on a distributed database, preferrably on a blockchain. Therefore, the transactions are recorded in a secure and immutable fashion while providing greater transparency into the verification and/or calibration processes.

The method further comprises identifying the baseline data associated with the component from the distributed database. In one embodiment, identifying the baseline data associated with the component from the distributed database comprises identifying, by the processing unit, a transaction corresponding to the component from the distributed database based on the unique identifier associated with the component. In one implementation, the one or more transactions are identified by traversing headers associated with each of the transactions recorded on the distributed database. Further, the metadata in each of the headers is checked to determine whether the transaction is associated with the component based on the unique identifier present in the metadata. In another implementation, the unique identifier associated with the asset may be used to determine a location of the transaction comprising the baseline data associated with the component. For example, the unique identifier may be mapped to the location of the transaction using a lookup table. The lookup table may map unique identifiers associated with one or more components in the asset to locations of respective transactions corrresponding to the one or more components. Further, the baseline data associated with the component is obtained from the identified transaction.

Advantageously, the baseline data stored on the distributed database, specifically a blockchain, may not be modified by an unauthorized entity. Therefore, the present invention facilitates a tamper-proof and more accurate mechanism for verification of the asset compared to existing art. Further, records stored on the blockchain are immutable, decentralized and traceable in real time.

The method further comprises verifying the asset based on the baseline data and the fingerprint associated with the component. In one embodiment, verifying the asset based on the baseline data and the fingerprint associated with the component comprises comparing, by the processing unit, the response of the component to the stimulus with the baseline data for computing a deviation in the response of the component. In one example, the deviation is computed as a difference between the response of the component and the reference value in the baseline data. In another example, the deviation is computed as a difference between the response of the component and the reference value expressed as a percentage of the reference value. Further, a condition of the component is determined based on the deviation computed. In one example, the condition of the component is determined by comparing the deviation against predefined standards associated with the asset. In one implementation, the predefined standards may be stored on the transaction corresponding to the component. In another example, the predefined standards may be stored in the local memory unit associated with the asset. For example, the predefined standards may be defined such that the deviation may not be greater than 5% of the reference value. Further, the asset is verified based on the determined condition of the component. More specifically, if the computed deviation conforms to a predefined standard associated with the asset, the component may be determined to be in working condition. Similarly, the condition of a plurality of components of the asset may be determined. If the plurality of components of the asset are determined to be in working condition, then the asset is verified. Otherwise, if the computed deviation fails to conform to the predefined standard, the component may be determined to be faulty. Consequently, the asset is not verified. In a preferred embodiment, an asset is verified only if all the components in the asset are determined to be in working condition, based on the method as described above.

Advantageously, the present invention facilitates determining condition of each component of the asset for verification of the asset.

The method may further comprise determining one or more anomalies in the asset based on the condition of the component. In one embodiment, the one or more anomalies may be determined if the component is faulty. In one example, the one or more anomalies may be determined by analysing historic data associated with the component. In one implementation, the historic data may be stored in the transaction identified for the component. In one example, the historic data may include responses of the component during verifications conducted on the asset previously. In another example, the historic data may include operational data associated with the asset over a predefined interval of time. The historic data may be analysed using one or more of descriptive techniques, exploratory techniques, inferential techniques, predictive techniques, causal techniques, qualititative analysis techniques, quantitative analysis techniques and so on. In an embodiment, the historic data may be analysed using a predictive model based on neural networks for determining the one or more anomalies in the asset. In a further embodiment, a remaining useful life of the component of the asset may also be predicted, using the predictive models, based on the historic data.

Advantageously, the present invention helps in precisely determining the anomalies in the asset based on condition of each of the components in the asset.

The method may further comprise generating one or more recommendations for maintenance of the asset based condition of the component. The recommendations may be generated based on predefined rules. For example, the recommendation may be associated with repair or replacement of the component if the component is determined to be faulty. In another example, the recommendation may be associated with applying a tolerance limit to an output of the asset if the component is in working condition. The tolerance limit may be determined based on the deviation computed for the component. In one example, the tolerance limit is determined from the deviation computed for the component using a suitable mathematical equation. In another example, the tolerance limit may be a weighted average of the deviations computed for each component of the asset. In yet another example, the tolerance limit may be expressed as a correction factor.

The method may further comprise optimising a down-time of the asset by scheduling a maintenance activity based on the condition of the component. For example, if the component is faulty, the maintenance activity may include replacement of the component. If the component is in working condition and the historic data associated with the component indicates an increase in the deviation over a predefined interval of time, the maintenance activity may include repairing the component. The maintenance activity may also include ordering for a replacement of the component. The maintenance activity may be scheduled based on availability of spares, the condition of the component, availability of service personnel for performing the maintenance activity and so on. In one embodiment, scheduling of the maintenance activity may include determining an optimal replacement time for the component, identifying service personnel for performing the maintenance activity and so on. The availability of spares and service personnel may also be considered for scheduling the maintenance activity. For example, if the spares are unavailable, then the probability that the spares may be procured before the start of the maintenance activity may be considered for determining the down-time. In one embodiment of the present invention, the service personnel may also be informed to procure the spares before the start of the maintenance activity by sending a notification to an electronic device associated with the service personnel. Non-limiting examples of electronic devices include a mobile phone, a personal computer and a personal digital assistant. In yet another example, the maintenance activity may include a next verification or calibration of the asset.

Advantageously, the present invention helps in optimising the downtime of the asset, thereby ensuring maximized productivity of asset.

The method may further comprise updating the distributed database based on the response of the component to the stimulus. In one embodiment, the response of the component may be recorded on the distributed database as a new transaction. The new transaction may comprise a time-stamp associated with providing the stimulus to the component, the unique identifier associated with the component and the response of the component to the stimulus. In yet another embodiment, an existing transaction associated with component, on the distributed database, may be updated with the time-stamp associated with the stimulus and the response of the component.

The method may further comprise outputting a result of verifying the asset on a Graphical User Interface (GUI) associated with an output device. In an example, the output device may be associated with the OEM, a certification authority or an end user. The output device may be any device having a GUI configured for displaying the result of verifying the asset. Non-limiting examples of the output device include a smartphone, a personal computer, a workstation and a personal digital assistant.

The object of the present invention is achieved by an node comprising one or more processing units and a memory unit communicatively coupled to the one or more processing units one or more processing units and a memory unit communicatively coupled to the one or more processing units. The memory unit comprises one or more transactions associated with management of the asset and one or more modules stored in the form of machine-readable instructions executable by the one or more processing units. The one or more modules are configured to perform method steps according to the method as described above. The execution of the one or more modules may also be performed using co-processors such as Graphical Processing Unit (GPU), Field Programmable Gate Array (FPGA) or Neural Processing/Compute Engines. In addition, the memory unit may also include a database.

Additionally, the object of the present invention is achieved by a system comprising a network and a plurality of nodes as described above, communicatively coupled over the network. The plurality of nodes are configured as a distributed database for facilitating management of an asset to the method as described above.

The term "distributed database" or "distributed database system" in context of the invention may refer to, for example, a blockchain, a distributed ledger, distributed memory system, a distributed ledger technology (DLT) based system (DLTS), a revision secure/protected database (system), a cloud, a cloud-service, a blockchain as a cloud service or a peer-to-peer database. Additionally or alternatively a "distributed database" or "distributed database system" can, for example, be implemented by means of a directed acyclic graph (DAG) or a hash graph (e.g., IOTA). Additionally or alternatively a "distributed database" or "distributed database system" can, for example, be distributed database where at least a part of the components/elements of the distributed database is implemented by means of a cloud infrastructure. For example, nodes/devices of a distributed database system can be implemented as virtual devices of a cloud (service) (e.g., a virtual node/device. In a preferred embodiment, the distributed database is a blockchain. The blockchain may be one of a permissioned blockchain, a public blockchain or a combination thereof. The term "record" in context of the invention may refer to, for example, a block of a blockchain, a data-block of a peer to peer database or a data structure for storing one or more transactions.

The object of the present invention is also achieved by a computer-program product having machine-readable instructions stored therein, which when executed by one or more processing units, cause the processing units to perform a method as described above.

The object of the present invention is also achieved by a computer readable medium on which program code sections of a computer program are saved, the program code sections being loadable into and/or executable in a system to make the system execute the method as described above, when the program code sections are executed in the system as described above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
The present invention is further described hereinafter with reference to illustrated embodiments shown in the accompanying drawings, in which:
- FIG 1A: illustrates a blockchain-based system for management of an asset, in accordance with one embodiment of the present invention;
- FIG 1B: illustrates functional components of each node on the blockchain-based system for management of the asset, in accordance with one embodiment of the present invention;
- FIG 2: illustrates a flowchart of a method for management of the asset, in accordance with one embodiment of the present invention;
- FIG 3: illustrates a flowchart of a method for obtaining a fingerprint associated with a magnetic coil of the flowmeter, in accordance with one exemplary embodiment of the present invention;
- FIG 4: illustrates a flowchart of a method for identifying baseline data associated with the magnetic coil from a blockchain, in accordance with one exemplary embodiment of the present invention; and
- FIG 5: illustrates a method for verifying the flowmeter based on the baseline data and the fingerprint associated with the magnetic coil, in accordance with one exemplary embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Disclosed embodiments provide systems and methods for management of an asset.

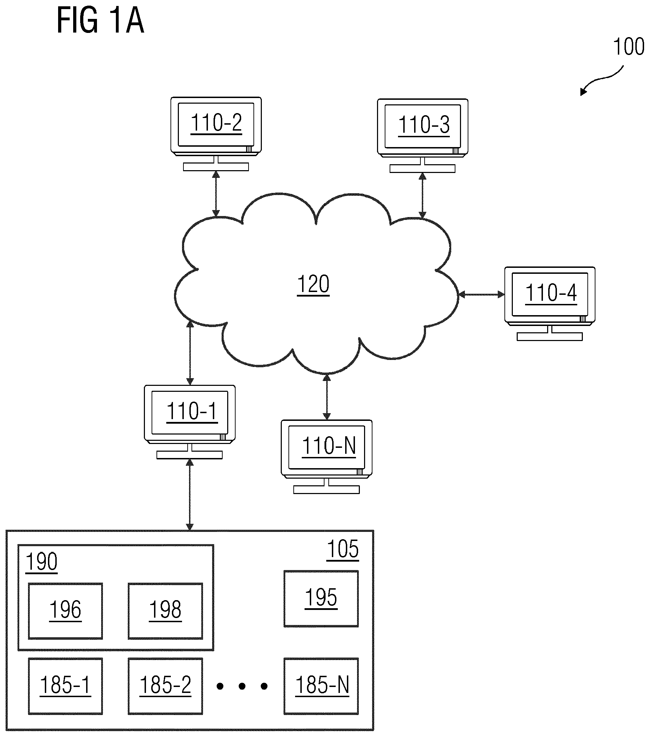

Referring to FIG 1A, a blockchain-based system 100 for management of an asset 105 is described, in accordance with one embodiment of the present invention. The system 100 comprises a plurality of nodes 110-1, 110-2, 110-3, 110-4, 110-5, ... 110-N, hereinafter collectively referred as the plurality of nodes 110, communicatively coupled to each other over a network 115. In the present embodiment, the distributed database is implemented as a blockchain comprising the nodes 110-1, 110-2, 110-3, 110-4, 110-5, ... 110-N. Each of the nodes 110 may be a (personal) computer, a smartphone, a personal digital assistant a workstation, a virtual machine running on host hardware, a microcontroller, or an integrated circuit. As an alternative, each of the nodes 110 may be a real or a virtual group of computers (the technical term for a real group of computers is "cluster", the technical term for a virtual group of computers is "cloud"). It must be understood that the system 100 may comprise any number of nodes and each of the nodes 110-1, 110-2...110-N may be associated with an entity that may be involved in verification of the asset 105, validation of the asset 105 or providing maintenance services for the asset 105. In an exemplary embodiment, the node 110-1 may be associated with an end-user of the asset, the node 110-2 may be associated with a vendor, the node 110-3 may be associated with another end-user of a similar asset, the node 110-4 may be associated with a certifying agent and so on. Therefore, an end-user may connect to the system 100 from an electronic device, at any point of time. Upon connecting, the electronic device associated with the end-user is considered as a node on the system 100.

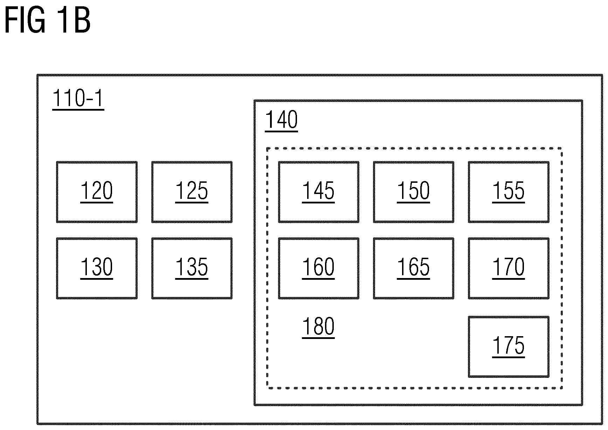

The node 110-1 is described in greater detail in FIG 1B. The remaining nodes 110-2, 110-3....110-N are similar to the node 110-1.

Referring to FIG 1B, the node 110-1 includes a communication unit 120, one or more processing units 125, a display 130, a Graphical User Interface (GUI) 135 and a memory 140 communicatively coupled to each other. In one embodiment, the communication unit 120 includes a transmitter (not shown), a receiver (not shown) and Gigabit Ethernet port (not shown). The memory 140 may include 2 Giga byte Random Access Memory (RAM) Package on Package (PoP) stacked and Flash Storage. The one or more processing units 125 are configured to execute the defined computer program instructions in the modules. Further, the one or more processing units 125 are also configured to execute the instructions in the memory 140 simultaneously. The display 130 includes a High-Definition Multimedia Interface (HDMI) display and a cooling fan (not shown). Additionally, control personnel may access the node 110-1 through the GUI 135. The GUI 135 may include a web-based interface, a web-based downloadable application interface, and so on.

The processing unit 125, as used herein, may refer to any type of computational circuit, including, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 125 may also include embedded controllers, such as generic or programmable logic devices or arrays, application specific integrated circuits, single-chip computers, and the like. In general, a processing unit 125 may comprise hardware elements and software elements. The processing unit 125 can be configured for multithreading, i.e. the processing unit 125 may host different calculation processes at the same time, executing the either in parallel or switching between active and passive calculation processes.

The memory 140 may comprise a volatile memory and a nonvolatile memory. The memory 140 may be coupled for communication with the processing unit 125. The processing unit 125 may execute instructions and/or code stored in the memory 140. A variety of computer-readable storage media may be stored in and accessed from the memory 140. The memory 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. The memory 140 stores a record of all the transactions happening across the blockchain. It must be understood that each of the nodes 110-1, 110-2...110-N store the same copy of the transactions. Consequently, if any of the nodes 110-1, 110-2...110-N attempt to modify existing records on the blockchain or to write a new record into the blockchain, each of the nodes 110-1, 110-2...110-N may validate such transactions through a consensus protocol. In the present embodiment, the blockchain may be based on a public blockchain where any node among the plurality of nodes 110-1, 110-2...110-N may read transactions recorded on the blockchain and may also participate in validation of new transactions through the consensus protocol. The consensus protocol enables the nodes 110-1, 110-2...110-N to agree on a transaction before being recorded on the blockchain. Each of the nodes 110-1, 110-2...110-N may be one of a member node or a validator node. The member nodes may initiate or recieve transactions on the blockchain-based system 100, whereas the validator nodes may also validate transactions on the blockchain-based system 100 in addition to initiating or receiving transactions.

The memory 140 comprises a preprocessing module 145, a retrieval module 150, a verification module 155, an anomaly detection module 160, a maintenance module 165, a report generation module 170 and a blockchain updation module 175, henceforth collectively referred as an asset management module 180. The asset management module 180 is stored in the form of machine-readable instructions on any of the above-mentioned storage media and may be in communication to and executed by the one or more processing units 125. The following description explains functions of the modules when executed by the one or more processing units 125.

The preprocessing module 145 is configured for obtaining a fingerprint associated with at least one component of the asset 105 from a source. The fingerprint comprises a response of the component to a stimulus and a unique identifier associated with the component.

The retrieval module 150 is configured for identifying baseline data associated with the component from the blockchain.

The verification module 155 is configured for verifying the asset 105 based on the baseline data and the fingerprint associated with the component.

The anomaly detection module 160 is configured for determining one or more anomalies in the asset 105 on the condition of the component.

The maintenance module 165 is configured for generating one or more recommendations for maintenance of the asset 105 based on the condition of the component. In addition, the maintenance module 165 is also configured for optimising a down-time of the asset 105 by scheduling a maintenance activity for the asset 105 based on the condition of the component.

The report generation module 170 is configured for generating reports associated with management of the asset 105. The generated reports may include, for example, the result of verifying the asset 105, anomalies in the asset 105, one or more recommendations for maintenance of the asset 105 and a schedule for a maintenance activity to be performed on the asset 105.

The blockchain updation module 175 is configured for updating the blockchain based on the response of the component to the stimulus.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

A system in accordance with an embodiment of the present invention includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present invention as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises elements distributed among one or more server systems that perform multiple functions according to various embodiments. These elements comprise, for example, executable, intermediate, or interpreted code, which communicate over a network using a communication protocol. The present invention is not limited to be executable on any particular system or group of systems, and is not limited to any particular distributed architecture, network, or communication protocol.

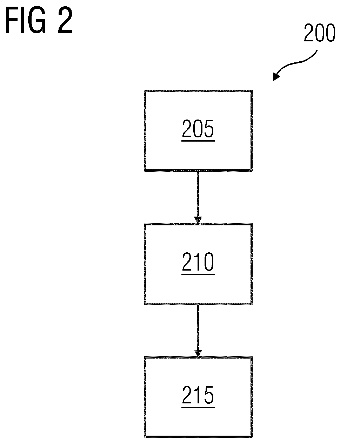

Referring to FIG 2, in conjunction with FIGS 1A and 1B, a method 200 for management of the asset 105 is described, in accordance with one embodiment of the present invention. The method 200 comprises steps 205 to 215 and may be implemented on the system 100.

At step 205, a fingerprint associated with at least one component of the asset 105 is obtained from a source.

At step 210, baseline data associated with the component is identified from a blockchain.

At step 215, the asset 105 is verified based on the baseline data and the fingerprint associated with the component.

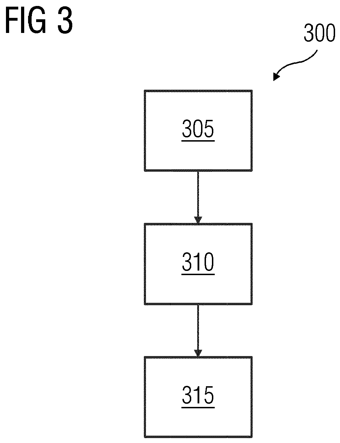

The method 200 is explained in greater detail below with reference to FIGS 3-5, by considering an electromagnetic flowmeter as the asset 105. The electromagnetic flowmeter may be installed on a pipeline carrying a fluid. In one embodiment, the electromagnetic flowmeter, hereinafter referred to as the flowmeter 105`, may comprise a plurality of sensors 185-1, 185-2...185-M (henceforth collectively referred to as the plurality of sensors 185), a microcontroller 190 and a transceiver unit 195. The plurality of sensors 185-1, 185-2...185-M may include, but are not limited to, temperature sensors, pressure sensors and flowrate sensors. The flowrate sensor may comprise a magnetic coil (not shown) and a pair of electrodes (not shown). The flowrate sensor may measure the flowrate of a medium based on Faraday's Law of Electromagnetic Induction. That is, when a conductive fluid passes through a magnetic field generated by the magnetic coil, a voltage is generated across the electrodes. The generated voltage is proportional to the velocity of the medium, the density of the magnetic field and a length of the pipeline carrying the medium.

The transceiver unit 195 is configured for sending and receiving of data and instructions from an external device. The external device is the node 110-1. The external device may be, for example, a personal computer installed with an application software for processing data received from the flowmeter 105 and for sending instructions to the flowmeter 105. However, it must be understood that the functions of the external device may be integrated into the microcontroller 190 of the flowmeter 105. The microcontroller 190 comprises an internal memory 196 and a processor 198. The internal memory 196 may store unique identifiers associated with one or more components of the flowmeter 105. In addition, the internal memory 196 also stores machine-readable instructions, which when executed by the processor causes the microcontroller 190 to perform diagnostics on the flowmeter 105 upon receiving instructions from the external device. The microcontroller 190 is also configured for processing of sensor data received from the plurality of sensors 185. Upon preprocessing, the sensor data is transmitted through the transceiver unit 195. In another implementation, the microcontroller 190 is configured for automatically performing the diagnostics at regular intervals of time.

The accuracy of flowrate measured by the flowmeter 105 may depend on health of the magnetic coils and the electrodes. The health of the of the magnetic coils and the electrodes may depend on critical parameters, including but not limited to, a coil circuit resistance associated with magnetic coils, a coil inductance associated with the magnetic coils and an electrode resistance associated with the electrodes. The coil circuit resistance is an electrical resistance of the magnetic coil. The coil inductance is an inductance of the magnetic coil. The electrode resistance is an electrical resistance of the electrodes.

Referring to FIG 3, in conjunction with FIGS 1A-2, a method 300 for obtaining a fingerprint associated with the magnetic coil of the flowmeter 105 is described, in accordance with one exemplary embodiment of the present invention. The method 300 is implemented on the node 110-1.

At step 305, a stimulus is applied to the flowmeter 105. In one example, the stimulus may be at least one of a maximum flow and a minimum flow. The maximum flow may be set by adjusting, for example, a control valve installed on the pipeline for maximum flow. Similarly, the minimum flow may be set by adjusting the control valve for minimum flow or no flow.

At step 310, the response of the magnetic coil to the stimulus is captured by one or more sensors on the flowmeter 105. The response is further processed by the microcontroller 190 to determine at least one of the coil circuit resistance and the coil inductance. For example, the response of the coil may be measured as an electric current of certain amplitude and frequency passing through the coil. Further, the coil circuit resistance may be calculated based on the electric current measured. Similarly, the coil inductance may also be measured.

At step 315, a unique identifier corresponding to the magnetic coil is obtained from the internal memory 196 of the microcontroller 190. Further, the unique identifier and the measured values of the critical parameters may be formatted into one or more data packets. Further, the transceiver unit 195 transmits the one or more data packets to the communication unit 120 of the node 110-1.

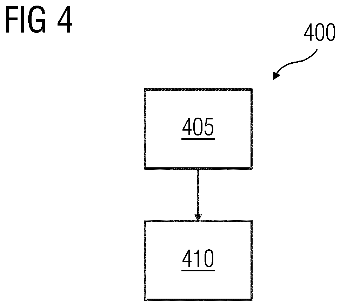

Referring to FIG 4, in conjunction with FIGS 1A-3, a method 400 for identifying baseline data associated with the magnetic coil from the blockchain is described, in accordance with one exemplary embodiment of the present invention. The method 400 is implemented on the node 110-1.

At step 405, a transaction corresponding to the magnetic coil is identified from the blockchain based on the unique identifier associated with the magnetic coil. In one example, the transaction may be identified by traversing headers associated with transactions stored on the blockchain. The transactions may be traversed in order of transaction identifiers present in the metadata associated with each of the transactions. In one embodiment, the transaction corresponding to the magnetic coil may be identified using a smart contract. The term `smart contract' as used herein, may be defined as a software module comprising a set of machine-readable instructions which, when executed, identifies the transaction corresponding to a specific component.

At step 410, the baseline data associated with the magnetic coil is obtained from the identified transaction. In the present embodiment, the smart contract may further comprise machine-readable instructions for reading the baseline data from the identified transaction. In the present embodiment, the baseline data may be the response of the magnetic coil obtained during verification of the flowmeter 105 at the time of installation.

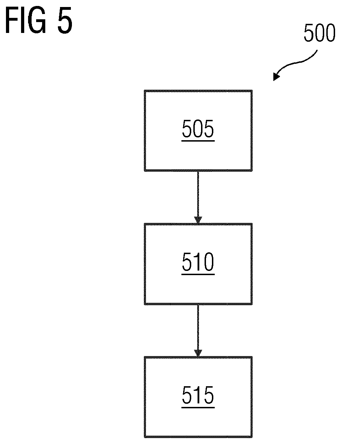

Referring to FIG 5, in conjunction with FIGS 1A-4, a method 500 for verifying the flowmeter 105 based on the baseline data and the fingerprint associated with the magnetic coil is described, in accordance with one exemplary embodiment of the present invention. The method 500 is implemented on the node 110-1.

At step 505, the response of the magnetic coil to the stimulus is compared with the baseline data for computing a deviation in the response of the magnetic coil. For example, the baseline data may indicate that the baseline value of the coil circuit resistance is 10 Ohms and the response of the magnetic coil may indicate that the present value of the coil circuit resistance is 12 Ohms. Therefore, the difference in the coil circuit resistance is as 2 Ohms. The deviation may be computed as 20% ((2 Ohms/10 Ohms)*100) of the baseline value.

At step 510, a condition of the magnetic coil is determined based on the deviation computed. The condition is determined by comparing the deviation against predefined standards for the magnetic coil. The predefined standard for the magnetic coil may be such that the deviation in the coil circuit resistance may not be greater than 15%. In the present example, the computed deviation does not conform to the predefined standard. Therefore, the condition of the magnetic coil may be determined as faulty. In other words, there is a deterioration in the health of the magnetic coil. Otherwise, if the deviation conforms to the predefined standards, the magnetic coil is determined to be in working condition.

At step 515, the flowmeter 105 is verified based on the determined condition of the magnetic coil. In other words, the flowmeter 105 is verified as operating within specifications if the magnetic coil is determined to be in working condition. Otherwise, the flowmeter 105 is not verified.

In a preferred embodiment, the flowmeter 105 as described above is verified only if the magnetic coil, the electrodes and the sensors are in working condition. Otherwise, the asset 105 is not verified. Further, a result of the verification is displayed on the display 130 associated with the node 110-1.

In one embodiment, one or more anomalies in the flowmeter 105 is determined based on the condition of one or more components of the flowmeter 105. For example, the anomaly may be determined by providing the values of the critical parameters as input to a neural network-based model, if the magnetic coil or any other component of the flowmeter 105 is determined to be faulty. The neural network-based model may be pretrained based on historic data associated with the flowmeter 105 or other similar flowmeters having similar specifications. The historic data may comprise values of critical parameters obtained during verification procedures and anomalies corresponding to a plurality of similar flowmeters. Based on the input, the neural network may provide the anomaly associated with the flowmeter 105 as output. For example, the anomaly may be associated with a corrosion of the magnetic coil. Similarly, another neural network-based model may be pretrained for predicting a remaining useful life of the component. Further, a notification indicating the anomaly in the flowmeter 105 and the remaining useful life of the component is displayed as a notification on the GUI 135 of the node 110-1.

In one embodiment, one or more recommendations for maintenance of the flowmeter 105 is generated based on the condition of one or more components of the flowmeter 105. For example, if all the components of the flowmeter 105 are in working condition, the recommendation is associated with applying a correction factor to measurements performed using the flowmeter 105. The correction factor may be determined based on the deviation computed for each of the components of the flowmeter 105 during the verification process. The correction factor may be a weighted average of the deviations computed for all the components of the flowmeter 105. If at least one component of the flowmeter 105, for example, the magnetic coil is faulty, the recommendation generated may be associated with replacement of the magnetic coil. The one or more recommendations may be displayed on the GUI 135 of the node 110-1.

In one embodiment, a down-time of the flowmeter 105 is optimised by scheduling a maintenance activity based on the condition of the one or more components. In one example, the down-time may be optimised by scheduling replacement for faulty components of the flowmeter 105, based on earliest availability of service personnel and spares for the faulty component. Similarly, replacement of the faulty component may be scheduled before end of the remaining useful life of the component. Further, the optimised down-time along with a schedule of the maintenance activity may be displayed on the GUI 135 of the node 110-1.

In one embodiment, the blockchain is updated based on the response of the component. More specifically, the response of the component during the verification is recorded as a transaction using a hash function. The transaction may comprise various fields, including but not limited to, a time-stamp associated with the verification of the component, the unique identifier associated with the component and the response of the component obtained during the verification. In one implementation, the transaction is created by using a hash function. The hash function may receive values for each of the fields and convert the values to data of fixed sizes. The data of fixed sizes may referred to as hashed values`. In addition, the hash function may also encrypt the fields before or after converting the values to the data of fixed sizes. Upon converting the data to fixed sizes, the transaction is created by combining the different fields in a predefined manner. For example, the hashed values of the time-stamp, the unique identifier associated with the asset 105 and the responses of the one or more components may be appended to create the transaction. Further, the transaction is appended with a header comprising metadata associated with the transaction and recorded on the blockchain. In a preferred embodiment, the metadata may comprise a location of the transaction on the blockchain and the unique identifier associated with the component. The new transaction may be validated by validator nodes based on the consensus protocol before being recorded on the blockchain. If the validator nodes invalidate the transaction based on the consensus protocol, the new transaction is not recorded on the blockchain.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deducted by those skilled in the art without leaving the scope of protection of the claimed invention.

### Reference Numerals

- 100: blockchain-based system for management of an asset
- 105: asset
- 110: plurality of nodes
- 115: network
- 120: communication unit
- 125: one or more processing units
- 130: display
- 135: Graphical User Interface
- 140: memory
- 145: preprocessing module
- 150: retrieval module
- 155: verification module
- 160: anomaly detection module
- 165: maintenance module
- 170: report generation module
- 175: blockchain updation module
- 180: asset management module
- 185: plurality of sensors
- 190: microcontroller
- 195: transceiver unit
- 196: internal memory of the microcontroller
- 198: processor of the microcontroller

## Claims

1. A computer-implemented method for management of an asset (105), the method comprising:
obtaining, by a processing unit (125), a fingerprint associated with at least one component of the asset (105) from a source (195), wherein the fingerprint comprises a response of the component to a stimulus and a unique identifier associated with the component;
identifying, by the processing unit (125), baseline data associated with the component from a distributed database; and
verifying, by the processing unit (125), the asset (105) based on the baseline data and the fingerprint associated with the component.

2. The method according to claim 1, wherein the baseline data comprises a response of the component obtained from one or more verifications conducted on the asset (105) previously.

3. The method according to claim 1, wherein the baseline data is associated with one or more calibrations performed on the asset (105) previously.

4. The method according to claim 1, wherein identifying the baseline data associated with the component from the distributed database comprises:
identifying, by the processing unit (125), a transaction corresponding to the component from the distributed database based on the unique identifier associated with the component; and
obtaining, by the processing unit (125), the baseline data associated with the component from the identified transaction.

5. The method according to claim 1, wherein verifying the asset (105) based on the baseline data and the fingerprint associated with the component comprises:
comparing, by the processing unit (125), the response of the component to the stimulus with the baseline data for computing a deviation in the response of the component; and
determining, by the processing unit (125), a condition of the component based on the deviation computed; and
verifying, by the processing unit (125), the asset (105) based on the condition of the component determined.

6. The method according to claim 5 further comprising:
determining, by the processing unit (125), one or more anomalies in the asset (105) based on the condition of the component.

7. The method according to claim 5 further comprising:
generating, by the processing unit (125), one or more recommendations for maintenance of the asset (105) based on the condition of the component.

8. The method according to claim 5 further comprising:
optimising, by the processing unit (125), a down-time of the asset (105) by scheduling a maintenance activity based on the condition of the component.

9. The method according to claim 1 further comprising:
updating, by the processing unit (125), the distributed database based on the response of the component to the stimulus.

10. The method according to claim 1 further comprising:
outputting, by the processing unit (125), a result of verifying the asset (105) on a Graphical User Interface (135) associated with an output device.

11. An node (110-1) for management of an asset (105), the node (110-1) comprising:
one or more processing units (125); and
a memory unit (140) communicatively coupled to the one or more processing units (125), wherein the memory unit (140) comprises one or more transactions associated with management of the asset (105) and one or more modules stored in the form of machine-readable instructions executable by the one or more processing units (125), wherein the one or more modules (180) is configured to perform method steps according to any of the claims 1 to 10.

12. A system (100) comprising:
a network (115); and
a plurality of nodes (110) according to claim 11, communicatively coupled over the network (115), wherein the plurality of nodes (110) are configured as a distributed database for facilitating management of an asset (105) according to any of the method claims 1 to 10.

13. The system (100) according to claim 12, wherein the distributed database is a blockchain.

14. A computer-program product having machine-readable instructions stored therein, which when executed by one or more processing units (125), cause the processing units (125) to perform a method according to any of the claims 1 to 10.

15. A computer readable medium on which program code sections of a computer program are saved, the program code sections being loadable into and/or executable in a system (100) to make the system execute the method of any one of the claims 1 to 10 when the program code sections are executed in the system (100).
